# EUROPÄISCHE PATENTSCHRIFT

(11) **EP 3 509 828 B1**
(45) Veröffentlichungstag und Bekanntmachung des Hinweises auf die Patenterteilung: **29.01.2020**
(21) Anmeldenummer: 17754259.4
(22) Anmeldetag: 16.08.2017
(51) Int. Cl.: B29C 70/48, B29C 70/78, B29C 70/84, B29C 70/86, B29C 44/12, B29C 70/46, B29C 35/08, B29K 105/06, B29K 101/10, B29L 31/30, B29C 35/02, B29K 105/08

(54) **VERFAHREN ZUR HERSTELLUNG EINES KAROSSERIEVERBUNDBAUTEILS MIT UV-HÄRTENDEM KUNSTSTOFF**
METHOD FOR PRODUCING A COMPOSITE CAR BODY COMPONENT WITH UV-HARDENED PLASTIC
PROCÉDÉ PERMETTANT DE FABRIQUER UN ÉLÉMENT COMPOSITE DE CARROSSERIE AVEC UNE MATIÈRE PLASTIQUE DURCISSANT AUX UV

(30) Priorität: 10.09.2016 DE 102016010987
(43) Veröffentlichungstag der Anmeldung: 17.07.2019
(73) Patentinhaber: Audi AG, 85045 Ingolstadt (DE)
(72) Erfinder: JÄSCHKE, Anja, 92339 Beilngries (DE)
(86) Internationale Anmeldenummer: PCT/EP2017/000986
(87) Internationale Veröffentlichungsnummer: WO 2018/046118

(56) Entgegenhaltungen:
- EP-A1- 1 626 851
- EP-A2- 2 000 276
- GB-A- 2 423 279
- US-A1- 2005 173 010
- US-A1- 2010 243 152
- Beate Ganter: "The technical service magazine for the rubber industry Volume 248, No. 4 JULY 2013", Rubber World, 1 July 2013 (2013-07-01), XP055322569, Retrieved from the Internet: URL:http://www.momentive.com/uploadedFiles /Product_Literature/Silicones/Elastomers/R ubber World.pdf [retrieved on 2016-11-24]

## Beschreibung

Die Erfindung betrifft ein Verfahren zur Herstellung eines Karosserieverbundbauteils, das wenigstens bereichsweise mehrere Lagen aus unterschiedlichen Werkstoffen aufweist, wobei wenigstens eine der Lagen aus duroplastischem Kunststoff gebildet ist.

Mehrlagige bzw. mehrschichtige Verbundbauteile bieten die Möglichkeit Eigenschaften verschiedener Werkstoffe zu kombinieren (Mischbau). Ferner sind spezielle Funktionen (bspw. Gewichtseinsparung, Belastungsverformung, Schall- und Schwingungsdämpfung usw.), einstellbar. Solche Verbundbauteile eignen sich somit sehr gut als Karosseriebauteile für den Fahrzeugbau. Karosseriebauteile sind bspw. räumlich geformte, flächige Außenhaut- oder Strukturbauteile. Karosseriebauteile können aber auch Profilbauteile, insbesondere Profilstrukturbauteile, sein.

Für die Herstellung von Verbundbauteilen mit duroplastischen Anteilen werden häufig heißhärtende duroplastische Kunststoffmaterialien verwendet. Hierbei handelt es sich zumeist um Harze (bspw. Epoxidharz, Polyesterharz oder Polyurethan) die flüssig oder zähflüssig sind (gegebenenfalls erst nach Verflüssigung) und dann beim Erwärmen vernetzen und aushärten. Eine solche Erwärmung ist allerdings nicht immer möglich, bspw. wenn andere Lagen des Verbundaufbaus wärmeempfindlich sind. Die Erwärmung ist außerdem mit Energiekosten verbunden. Ein weiterer Nachteil sind die bei dem Prozess entstehenden Eigenspannungen im Verbund, da die unterschiedlichen Materialien auch unterschiedliche Wärmeausdehnungskoeffizienten aufweisen. Ein so hergestelltes Bauteil kann nach mehreren Klimazyklen einen Verzug aufweisen, was vorab bspw. durch konstruktive Toleranzausgleichsmaßnahmen berücksichtigt werden muss.

Daneben gibt es Harze, die durch ultraviolette Bestrahlung, d. h. mit UV-Licht, ausgehärtet werden können, ohne dass eine Erwärmung erforderlich ist. Allerdings muss die in einem Verbundaufbau auszuhärtende Lage einem ausreichend intensiven UV-Licht ausgesetzt werden können. Die DE 10 2009 034 724 A1 schlägt hierzu ein Formwerkzeug aus transparentem Glas vor. Schattenstellen und Zwischenlagen sind damit allerdings nicht aushärtbar.

Das Dokument US 2005/173010 A1 offenbart eine mehrschichtige Kunststoffwand für einen Aufbau eines Kraftfahrzeugs, umfassend eine erste äußere durch einen Harzfilm gebildete Schicht, eine zweite an die erste Schicht angrenzende durch ein Vlies gebildete Schicht sowie eine dritte an die zweite angrenzende Schicht sowie ein entsprechendes Herstellungsverfahren.

Das Dokument GB 2 423 279 A offenbart ein Verfahren zum Ändern des Zustands eines Materialkörpers, indem er Strahlung ausgesetzt wird, wobei das Material mindestens ein optisch leitendes Element enthält, das die Strahlung in den Körper überträgt oder durch diesen verteilt. Das Dokument ,Beate Ganter: "The technical service magazine for the rubber industry Volume 248, No. 4 JULY 2013",Rubber World, 1. Juli 2013 (2013-07-01), offenbart das Spritzgießen von UV-härtenden Flüssigsiliconkautschuken unter Verwendung eines UV-transparenten Werkzeugs, das UV-Lampen umfasst.

Der Erfindung liegt die Aufgabe zugrunde, ein Verfahren zur Herstellung eines Karosserieverbundbauteils mit wenigstens einer duroplastischen Kunststofflage anzugeben, die wenigstens einen mit dem Stand der Technik einhergehenden Nachteil nicht oder zumindest nur in einem verminderten Umfang aufweisen.

Diese Aufgabe wird gelöst durch das erfindungsgemäße Verfahren mit den Merkmalen des Patentanspruchs 1.

Das offenbarungsgemäße Verfahren zur Herstellung eines Karosserieverbundbauteils umfasst folgende Schritte:
- Aufbau der Lagen, wobei wenigstens eine Lage aus einem UV-härtenden duroplastischen Kunststoff gebildet wird;
- Verpressen der Lagen, wobei gleichzeitig die aus UV-härtendem duroplastischem Kunststoff gebildete Lage über darin eingebettete lichtleitende Fasern mit UV-Licht ausgehärtet wird.

Die Aushärtung des UV-härtenden duroplastischen Kunststoffs bzw. Harzes erfolgt also nicht von außen, sondern von innen, so dass immer eine optimale Aushärtung gewährleistet ist. In Bezug auf die Warmhärtung sind damit Karosserieverbundbauteile mit deutlich größeren Wanddicken herstellbar. Weitere Vorteile ergeben sich hinsichtlich Energieaufwand (die Aushärtung ist bei Raumtemperatur möglich) und Taktzeit (da keine Aufwärmung erforderlich und eine schnellere Aushärtung möglich ist). Die erfindungsgemäß hergestellten Karosserieverbundbauteile sind verzugsarm und rückfederungsfrei. Ferner weisen die erfindungsgemäß hergestellten Karosserieverbundbauteile ansprechende Oberflächen ohne Einfallstellen oder dergleichen auf. Durch den Einsatz UV-härtenden Harzes ist außerdem ein Fügen ohne zusätzliche Haftvermittler möglich. Die Erfindung ist auch für Kleinserien sowie Versuchs- und Prototypenbauteile geeignet.

Das ultraviolette Licht wird über lichtleitende Fasern bzw. Lichtleitfasern, die in die Kunststoff- bzw. Harzschicht eingebettet sind, in die auszuhärtende Kunststofflage eingebracht und über die Faserenden und/oder Fasermantelflächen abgestrahlt. Auf diese Weise wird eine intensive und umfassende UV-Ausleuchtung der zu härtenden Lage ermöglicht. Die lichtleitenden Fasern bzw. Lichtleitfasern in der duroplastischen Kunststoffschicht können später auch für eine gezielte Effektbeleuchtung des hergestellten Karosserieverbundbauteils verwendet werden und können somit eine Mehrfachfunktion haben.

Die lichtleitenden Fasern sind bspw. Glas- oder auch Kunstfasern. Da die bei optischen Fasern zur Totalreflektion erforderliche Beschichtung nicht vorhanden sein muss, treten bei Glasfasereinbettung in eine Kunststoffmatrix Streuverluste auf, die zur Polymerisation der umgebenden Kunststoffmatrix genutzt werden können. Diese Streuung vermindert zwar die Reichweite in den Fasern, führt aber zur Aushärtung der Matrix. Die eingeleitete Intensität bestimmt dabei die durchhärtbare Materialdicke und gegebenenfalls auch die Aushärtungsgeschwindigkeit. Beispielsweise sind mit 50 W/cm² mehrere Zentimeter Materialdicke aushärtbar.

Die anderen Lagen können bspw. aus Kunststoff, Fasermaterial, Faserverbundmaterial, Metall, Pappe, Holz, Gummi bzw. Elastomer oder dergleichen gebildet sein. Bei wenigstens einer Lage kann es sich auch um eine Schaum- oder Wabenstruktur oder dergleichen handeln (bspw. zur Gewichtsreduktion oder als Crashenergieabsorber). Bei der Lage aus UV-härtendem duroplastischem Kunststoff bzw. Harz handelt es sich bspw. um eine Zwischenlage bzw. -schicht, die andere Lagen bzw. Schichten miteinander verklebt. Erfindungsgemäß kann diese Zwischenlage selbst dann ausgehärtet werden, wenn die Nachbarlagen lichtundurchlässig sind. Auch Rohr-in-Rohr-Verbindungen mit UV-gehärteter Kunststoffzwischenschicht sind möglich.

Das Verpressen der Lagen bzw. des Lagenaufbaus kann mithilfe eines mit UV-Lampen ausgestatteten Werkzeugs erfolgen. Das Werkzeug ist bspw. ein Pressstempel. Das Werkzeug kann auch ein in einer Presse eingebautes Presswerkzeug mit Werkzeugoberteil, Werkzeugunterteil und dazwischen ausgebildeter Kavität sein. Die im Werkzeug integrierte UV-Lampen ermöglichen die Aushärtung der wenigstens einen UV-härtenden Harzlage während des Pressvorgangs. Der Pressdruck oder ein gegebenenfalls erforderlicher Gegendruck kann auch durch Aufblasen eines Ballons oder dergleichen oder durch Anlegen eines Vakuums erzeugt werden. Durch Aufblasen eines Ballons können auch Hohlstellen bzw. Hohlräume ausgebildet werden.

Die lichtleitenden Fasern können als Einzelfasern oder Faserrovings vorliegen, welche die UV-Harzlage durchziehen und auch eine Verstärkungsfunktion haben können. Vorzugsweise handelt es sich um Kunst- oder Glasfasern, die insbesondere als Endlosfasern (Faserlänge > 50 mm) ausgebildet sind. Ungeachtet dessen kann das UV-härtende Harz mit Verstärkungsfasern angereichert sein, wofür alle geeigneten Fasern in Betracht kommen. Die betreffende Lage kann also aus einem faserverstärkten Kunststoff mit duroplastischer Matrix gebildet sein. Bevorzugt ist vorgesehen, dass die lichtleitenden Fasern zugleich auch die Verstärkungsfasern sind, welche vorzugsweise in einem Faserverbund (bspw. Gewebe, Gelege, auch UD-Gelege, Gestick, Geflecht, Vlies oder dergleichen) angeordnet sind. Bevorzugt sind als Verstärkungsfasern nur lichtleitende Fasern vorgesehen.

Für den Aufbau der Lagen bzw. Lagenaufbau kann ein mit UV-härtendem (duroplastischem) Kunststoff bzw. Harz vorimprägnierter flächiger Faserhalbzeugzuschnitt (Prepregzuschnitt) oder nassgetränkter flächiger Faserhalbzeugzuschnitt mit lichtleitenden Verstärkungsfasern verwendet werden. (Ein vorimprägniertes Prepregmaterial benötigt allerdings Aufschmelzwärme zur Verflüssigung des enthaltenen Harzmaterials.) Bei dem Faserhalbzeug handelt es sich bspw. um ein Kunst- und/oder Glasfasern enthaltendes Gewebe, Gelege, auch UD-Gelege, Gestick, Geflecht, Vlies oder dergleichen (s. o.).

Alternativ kann ein trockener flächiger Faserhalbzeugzuschnitt mit bzw. aus lichtleitenden Verstärkungsfasern verwendet werden, der dann beim Verpressen durch eingespritzten UV-härtenden Kunststoff bzw. Harz infiltriert bzw. durchsetzt wird. Handelt es sich um eine Zwischenlage, so kann wenigstens eine Nachbarlage mit Löchern oder Kanälen ausgebildet sein oder mittels Kanülen oder dergleichen durchstochen werden, um den trockenen Faserhalbzeugzuschnitt zu erreichen.

Das erfindungsgemäße Verfahren beinhaltet die urformende bzw. originäre Herstellung eines Karosserieverbundbauteils in einem Presswerkzeug (s. o). Das erfindungsgemäße Verfahren kann dann bspw. folgende Schritte umfassen:
- Bereitstellen einer ersten und insbesondere auch einer zweiten Lage eines flächigen Materials, die bspw. aus den o. a. Lagenmaterialien bestehen und gegebenenfalls auch vorgeformt sein können;
- Bereitstellen wenigstens eines flächigen Faserhalbzeugzuschnitts (trocken, vorimprägniert oder nassgetränkt), der lichtleitende Fasern, insbesondere lichtleitende Verstärkungsfasern aufweist;
- Erzeugen eines Schicht- bzw. Lageaufbaus, welcher insbesondere eine zwischen erster und zweiter Lage befindliche Mittelschicht bzw. -lage des Faserhalbzeugzuschnitts aufweist;
- Zusammenpressen bzw. Verpressen des Lageaufbaus in dem Presswerkzeug mit oder ohne Umformung (wobei an den Oberflächen kleine bzw. enge Radien realisierbar sind), gegebenenfalls Einspritzen des UV-härtenden Kunststoffs bzw. Harzes, und gleichzeitiges Aushärten der Mittelschicht durch Einbringen von UV-Licht über die lichtleitenden Fasern.

Das Verfahren gemäß der Offenbarung beinhaltet auch das Patchen, d. h. das lokale Verstärken eines vorgefertigten Karosseriebauteils. Das vorgefertigte Karosseriebauteil ist bspw. ein flächiges Blech- oder FVK-Bauteil (FVK = faserverstärkter Kunststoff). Das vorgefertigte Karosseriebauteil kann auch ein metallisches Profilbauteil oder ein FVK-Profilbauteil sein. Das Verfahren gemäß der Offenbarung kann dann bspw. folgende Schritte umfassen:
- Bereitstellen des vorgefertigten Karosseriebauteils, insbesondere eines vorgefertigten Karosseriestrukturbauteils;
- Bereitstellen wenigstens eines flächigen Faserhalbzeugzuschnitts (trocken, vorimprägniert oder nassgetränkt), der lichtleitende Fasern, insbesondere lichtleitende Verstärkungsfasern, aufweist;
- Aufbringen des Faserhalbzeugzuschnitts auf einem zu verstärkenden Bereich der Oberfläche des Karosseriebauteils durch Anpressen (bspw. mittels Pressstempel, s. o.) und gleichzeitiges Aushärten durch Einbringen von UV-Licht über die lichtleitenden Fasern.

Der UV-härtende duroplastische Kunststoff kann beim Verpressen zunächst aufgeschäumt und dann erst ausgehärtet werden. Zum Aufschäumen kann dem UV-härtenden Harzmaterial ein Treibmittel beigemischt werden. Ebenso können dem UV-härtenden duroplastischen Kunststoff auch Füllstoffe, wie bspw. Metallspäne, Granulate, Hohlkügelchen oder dergleichen zugesetzt werden.

Beim Aufbau der Lagen kann auch wenigsten ein Insert platziert werden, dass dann beim Verpressen und Aushärten des UV-härtenden Harzes in das herzustellende Karosserieverbundbauteil eingebettet wird. Das Insert dient später bspw. als Lasteinleitungselement (Schraubpunkt, Schweißlasche oder dergleichen) und kann z. B. aus Metall, Keramik, Kunststoff, Kunstverbundmaterial oder dergleichen gebildet sein.

Die Vorrichtung gemäß der Offenbarung, wobei es sich insbesondere um ein Presswerkzeug oder einen Pressstempel handelt, weist auf:
- ein Werkzeug, bspw. Oberwerkzeug, Unterwerkzeug oder Stempelkopf, mit einer Kavität oder dergleichen; und
- wenigstens eine UV-Lampe, die so ausgebildet und im Werkzeugteil, insbesondere in der Kavitätswandung, angeordnet ist, dass damit beim Verpressen die aus UV-härtendem Kunststoff gebildete Lage (innerhalb der Kavität) über die darin eingebetteten lichtleitenden Fasern mit UV-Licht beaufschlagt werden kann.

Die Erfindung wird nachfolgend mit Bezug auf die Figuren näher erläutert. Die in den Figuren gezeigten und/oder nachfolgend erläuterten Merkmale können, auch unabhängig von bestimmten Merkmalskombinationen, die Erfindung weiterbilden. Ferner sind die in den Figuren gezeigten und/oder nachfolgend erläuterten Merkmale übergreifend zu weiteren Ausführungsformen der Erfindung kombinierbar.
- Fig. 1: zeigt schematisch in einer Schnittdarstellung eine erste Ausführungsmöglichkeit der Erfindung zur originären Herstellung eines mehrlagigen Karosserieverbundbauteils in einem Presswerkzeug.
- Fig. 2: zeigt schematisch in einer Schnittdarstellung eine zweite Ausführungsmöglichkeit der Erfindung zur Herstellung eines mehrlagigen Karosserieverbundbauteils durch lokales Verstärken ("Patchen") eines vorgefertigten Karosseriebauteils.

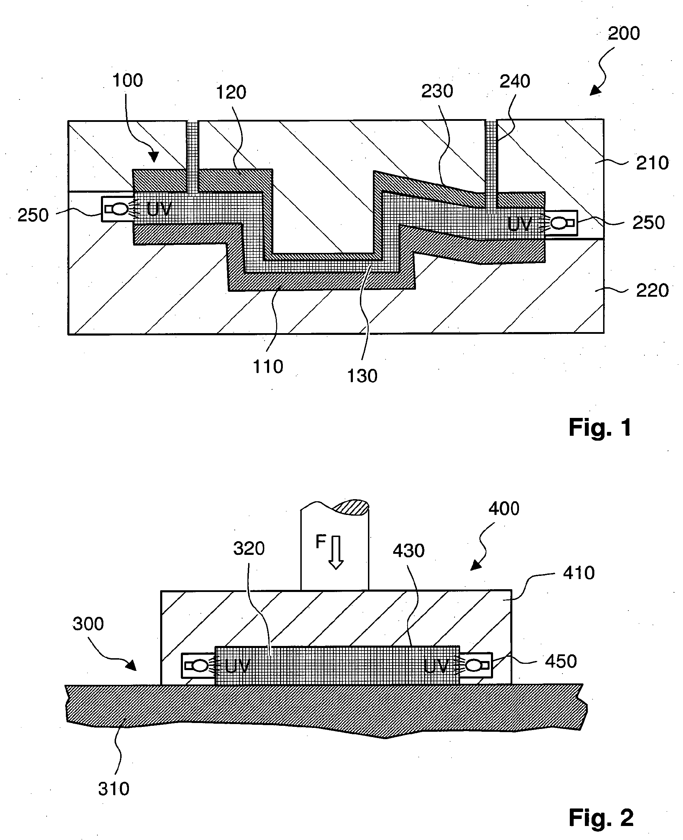

Fig. 1 zeigt die Herstellung eines dreilagigen Karosserieverbundbauteils 100, aus einer ersten Lage 110, bspw. einem Blech (z. B. mit einer Wanddicke von 0,5 mm bis 5,0 mm), und einer zweiten Lage 120, bspw. einem CFK-Material. Die beiden Lagen 110/120 werden durch eine dazwischen befindliche Mittellage 130 verbunden bzw. verklebt. Die einzelnen Lagen bzw. Schichten 110/120/130 haben beispielhaft eine inhomogene Dicke. Die mittlere Lage 130 ist von lichtleitenden Fasern o. ä. durchzogen.

Die Herstellung erfolgt in einem Presswerkzeug 200, das ein Werkzeugoberteil 210, ein Werkzeugunterteil 220 und eine zwischen diesen Werkzeugteilen 210/220 ausgebildete Kavität 230 aufweist. Die einzelnen Lagen 110/120/130 werden außerhalb des Presswerkzeugs 200 zu einem Lagenaufbau angeordnet, der in die Kavität 230 eingelegt wird, oder direkt in der Kavität 230 des geöffneten Presswerkzeugs 200 zu einem Lagenaufbau drapiert. Die mittlere Lage 230 wird dabei durch wenigstens einen trockenen Faserhalbzeugzuschnitt, in den lichtleitende Fasern eingearbeitet sind oder der aus lichtleitenden Verstärkungsfasern (bspw. Kunst- oder Glasfasern) besteht, gebildet. Die einzelnen Lagen 110/120/130 können vorgeformt sein oder beim Schließen des Presswerkzeugs 200 umgeformt werden. Nach dem Schließen des Presswerkzeugs 200 werden die Lagen 110/120/130 verpresst. Gleichzeitig oder kurz davor wird über die Kanäle 240 ein UVhärtendes duroplastisches Harzmaterial zwischen die beiden äußeren Lagen 110/120 bzw. in die mittlere Lage 130 eingespritzt, welches den Faserhalbzeugzuschnitt durchtränkt und infiltriert. Der Faserhalbzeugzuschnitt kann dabei vollständig oder nur partiell beaufschlagt werden. (Alternativ kann der Faserhalbzeugzuschnitt zuvor mit Harzmaterial getränkt werden.)

Noch während des Pressvorgangs wird das UV-härtende Harzmaterial über die darin eingebetteten lichtleitenden Fasern mit UV-Licht beaufschlagt, so dass dieses ausgehärtet wird. Im Presswerkzeug 200 sind hierfür im Randbereich der Kavität 230 mehrere UV-Lampen 250 in der Kavitätswandung angeordnet. Das von den UV-Lampen 250 erzeugte UV-Licht wird direkt oder indirekt (bspw. mittels Linsen oder dergleichen) in die offenen Faserenden der lichtleitenden Fasern eingekoppelt. Nach dem Aushärten der Mittellage 130 kann das Presswerkzeug 200 geöffnet und das typischerweise verbaufertige Karosserieverbundteil 100 entnommen werden. Diese Verfahrensweise kann auch als One-Shot-Verfahren bezeichnet werden.

In dem in Fig. 1 gezeigten Ausführungsbeispiel ist die UV-gehärtete Kunststofflage eine Mittellage. Ebenso kann diese jedoch auch eine Außenlage bzw. Deckschicht bilden. Anstatt des gezeigten einfachen Presswerkzeugs kann auch ein segmentiertes Werkzeug und/oder ein Werkzeug mit Schiebern zur Hinterschnittbildung eingesetzt werden.

Fig. 2 zeigt die Herstellung eines Karosserieverbundbauteils 300 mit einem vorgefertigten Karosserieteil 310, bspw. ein metallisches Profilstrukturbauteil, welches in dem gezeigten Bereich eine flächige Verstärkungslage 320 aufweist, die an die Kontur des Bereiches angepasst ist. Die bereichsweise Verstärkung ermöglicht eine gezielte Stabilisierung von potentiellen Schwachstellen, bspw. im Bereich von Fügeverbindungen.

Die Verstärkungslage 320 wird aus wenigstens einem Faserhalbzeugzuschnitt, in den lichtleitende Fasern eingearbeitet sind oder der aus lichtleitenden Verstärkungsfasern (bspw. Kunst- oder Glasfasern) besteht, gebildet. Der mit UV-härtendem Harz getränkte Faserhalbzeugzuschnitt wird im betreffenden Bereich auf das Karosserieteil 310 aufgelegt und mithilfe eines Press- bzw. Andrückstempels 400, der sich der Kontur anpasst, angedrückt bzw. angepresst, wie durch den Kraftpfeil F veranschaulicht. Noch während des Pressvorgangs wird das UV-härtende Harzmaterial über die darin eingebetteten lichtleitenden Fasern mit UV-Licht beaufschlagt, so dass dieses ausgehärtet wird. Im Stempelkopf 410 des Pressstempels 400 sind hierfür in der Ausnehmung bzw. Kavität 430 mehrere UV-Lampen 450 angeordnet. Nach dem Aushärten der Verstärkungslage 320 wird der Pressstempel 400 abgehoben. Die Verstärkungslage 320 ist nun dauerhaft mit dem Karosserieteil 310 verbunden.

Anstatt der einzelnen Verstärkungslage 320 können auch zwei oder mehr Verstärkungslagen vorgesehen sein, die mit einer Zwischenlage (analog zur Fig. 1) mit dem Karosserieteil 310 verbunden bzw. verklebt sind. Durch Modifikation der Harzrezeptur kann die aus UV-härtendem Harz gebildete Zwischenlage zusätzliche Funktionen erfüllen und bspw. als elastische Crashschicht (Verbundglaseffekt), Sperrschicht, Ausgleichsschicht für unterschiedliche Längenausdehnungen und/oder Korrosionsschutzschicht fungieren.

## Patentansprüche

1. Verfahren zur Herstellung eines Karosserieverbundbauteils (100, 300), das wenigstens bereichsweise mehrere Lagen (110, 120, 130; 310, 320) unterschiedlicher Werkstoffe aufweist, umfassend:
- Aufbau der Lagen (110, 120, 130; 310, 320), wobei wenigstens eine Lage (130, 320) aus UV-härtendem duroplastischem Kunststoff mit darin eingebetteten lichtleitenden Fasern gebildet wird;
- Verpressen der Lagen (110, 120, 130; 310, 320) innerhalb der Kavität (230, 430) eines Werkzeugs (200, 400), wobei im Randbereich der Kavität (230, 430) mehrere UV-Lampen (250, 450) in der Kavitätswandung angeordnet sind und das von den UV-Lampen (250, 450) erzeugte UV-Licht direkt oder indirekt in die offenen Faserenden der lichtleitenden Fasern eingekoppelt wird, sodass gleichzeitig mit dem Verpressen die aus UV-härtendem duroplastischem Kunststoff gebildete Lage (130, 320) über die darin eingebetteten lichtleitenden Fasern mit UV-Licht ausgehärtet wird.

2. Verfahren nach Anspruch 1, **dadurch gekennzeichnet, dass** die lichtleitenden Fasern zugleich Verstärkungsfasern sind.

3. Verfahren nach Anspruch 2, **dadurch gekennzeichnet, dass** für den Aufbau der Lagen (110, 120, 130; 310, 320) wenigstens ein mit UV-härtendem Kunststoff vorimprägnierter oder nassgetränkter flächiger Faserhalbzeugzuschnitt mit lichtleitenden Verstärkungsfasern verwendet wird.

4. Verfahren nach Anspruch 2, **dadurch gekennzeichnet, dass** für den Aufbau der Lagen (110, 120, 130; 310, 320) ein trockener flächiger Faserhalbzeugzuschnitt mit lichtleitenden Verstärkungsfasern verwendet wird, der dann beim Verpressen von eingespritztem UV-härtenden Kunststoff infiltriert wird.

5. Verfahren nach einem der Ansprüche 1 bis 4, **dadurch gekennzeichnet, dass** das Karosserieverbundbauteil (100) urformend in einem Presswerkzeug (200) hergestellt wird.

6. Verfahren nach einem der Ansprüche 1 bis 4, **dadurch gekennzeichnet, dass** das Karosserieverbundbauteil (300) durch Patchen eines vorgefertigten Karosseriebauteils (310) hergestellt wird.

7. Verfahren nach einem der vorausgehenden Ansprüche, **dadurch gekennzeichnet, dass** der UV-härtende duroplastische Kunststoff beim Verpressen zunächst aufgeschäumt und dann ausgehärtet wird.

8. Verfahren nach einem der vorausgehenden Ansprüche, **dadurch gekennzeichnet, dass** beim Aufbau der Lagen (110, 120, 130; 310, 320) wenigsten auch ein Insert platziert wird, welches dann in das herzustellende Karosserieverbundbauteil (100, 300) eingebettet wird.

## Claims

1. Method for producing a composite car body component (100, 300) which has at least partially several layers (110, 120, 130; 310, 320) of different materials, comprising:
- construction of the layers (110, 120, 130; 310, 320), wherein at least one layer ( 130, 320) is formed of UV-hardening duroplastic plastic having light-transmitting fibres embedded therein;
- pressing of the layers (110, 120, 130; 310, 320) within the cavity (230, 430) of a tool (200, 400), wherein in the edge region of the cavity (230, 430) several UV lamps ( 250, 450) are disposed in the cavity wall and the UV light generated by the UV lamps ( 250, 450) is coupled directly or indirectly into the open fibre ends of the light-transmitting fibres, such that simultaneously with the pressing the layer (130, 320) formed from UV-hardening duroplastic plastic is hardened with UV light by means of the light-conducting fibres.

2. Method according to claim 1, **characterised in that** the light-conducting fibres are simultaneously reinforcing fibres.

3. Method according to claim 2, **characterised in that** for the construction of the layers (110, 120, 130; 310, 320) at least one flat fibre semi-finished blank, preimpregnated or wet-soaked with UV-hardening plastic, having light-conducting reinforcing fibres is used.

4. Method according to claim 2, **characterised in that** for the construction of the layers (110, 120, 130; 310, 320) is used a dry flat fibre semi-finished blank having light-conducting reinforcing fibres, which then at the pressing is infiltrated with injected UV-hardening plastic.

5. Method according to any of claims 1 to 4, **characterised in that** the composite car body component (100) is manufactured in a primary forming manner in a pressing tool ( 200).

6. Method according to any of claims 1 to 4, **characterised in that** the composite car body component (300) is manufactured by patching a pre-fabricated car body component (310).

7. Method according to any of the preceding claims, **characterised in that** the UV-hardening duroplastic plastic is at the pressing first foamed and then hardened.

8. Method according to any of the preceding claims, **characterised in that** at the construction of the layers (110, 120, 130; 310, 320) at least also one insert is placed which is then embedded into the composite car body component (100, 300) to be produced.

## Revendications

1. Procédé de fabrication d'une pièce composite de carrosserie (100, 300), qui comprend au moins par endroits plusieurs couches (110, 120, 130; 310, 320) de différents matériaux, comprenant :
- la constitution des couches (110, 120, 130 ; 310, 320), dans lequel au moins une couche (130, 320) de matière plastique thermodurcissable durcissant aux UV avec des fibres optiques intégrées dans celle-ci est formée ;
- la pression des couches (110, 120, 130 ; 310, 320) à l'intérieur de la cavité (230, 430) d'un outil (200, 400), dans lequel plusieurs lampes à rayons ultraviolets (250, 450) sont disposées, dans la zone de bord de la cavité (230, 430), dans la paroi de cavité et la lumière ultraviolette produite par les lampes à rayons ultraviolets (250, 450) est injectée directement ou indirectement dans les extrémités de fibres ouvertes des fibres optiques, de sorte que la couche (130, 320) formée à partir de plastique thermodurcissable durcissant aux UV est durcie, simultanément avec la pression, avec de la lumière ultraviolette par l'intermédiaire des fibres optiques intégrées dans celle-ci.

2. Procédé selon la revendication 1, **caractérisé en ce que** les fibres optiques sont en même temps des fibres de renforcement.

3. Procédé selon la revendication 2, **caractérisé en ce qu'**au moins une découpe de semi-produit fibreux plane pré-imprégnée ou imbibée par voie humide avec le plastique durcissant aux UV, avec des fibres optiques de renforcement, est utilisée pour la constitution des couches (110, 120, 130 ; 310, 320).

4. Procédé selon la revendication 2, **caractérisé en ce qu'**une découpe de semi-produit fibreux plane sèche avec des fibres optiques de renforcement est utilisée pour la constitution des couches (110, 120, 130 ; 310, 320), qui est alors infiltrée lors de la pression par le plastique durcissant aux UV injecté.

5. Procédé selon l'une quelconque des revendications 1 à 4, **caractérisé en ce que** la pièce composite de carrosserie (100) est fabriquée par formage primaire dans un outil de presse (200).

6. Procédé selon l'une quelconque des revendications 1 à 4, **caractérisé en ce que** la pièce composite de carrosserie (300) est fabriquée par retouche d'une pièce composite de carrosserie (310) préfabriquée.

7. Procédé selon l'une quelconque des revendications précédentes, **caractérisé en ce que** le plastique thermodurcissable durcissant aux UV est tout d'abord expansé lors de la pression puis durci.

8. Procédé selon l'une quelconque des revendications précédentes, **caractérisé en ce que**, lors de la constitution des couches (110, 120, 130 ; 310, 320), au moins également un insert est placé, lequel est alors intégré dans la pièce composite de carrosserie (100, 300) à fabriquer.
